# EUROPEAN PATENT APPLICATION

(11) **EP 1 783 570 A1**
(43) Date of publication of application: **09.05.2007**
(21) Application number: 05110300.0
(22) Date of filing: 03.11.2005
(51) Int. Cl.: G05B 19/048

(54) **Tool monitoring system**

(71) Applicant: Snap-on Incorporated, Pleasant Prairie, Wisconsin 53158-1603 (US)
(72) Inventor: Buckley, Daniel M., Cork (IE)
(74) Representative: Moore, Barry

(57) **Abstract**

The present invention relates to a system for monitoring a set of tools, to enable a user to determine whether each tool in the set has been replaced in its container after use. The system provides a transponder attached to each tool in the set with a unique tool name assigned to each transponder. An inventory of the tool names of the set of tools is provided and associated with the tool container. A proximity sensor provided on the tool container is capable of communicating with each transponder to identify which tools in the set are in the tool container and which tools in the set are not in the tool container. The proximity sensor is further capable of communicating with transponders associated with individual users of the set of tools. The system further includes means for comparing the tools which are identified as being in the tool container with the inventory; and means for providing an indication to the user if all of the tools in the set are not in the tool container, and means for providing an indication as to which user removed the tool from the tool container.

## Description

### Field

The invention relates to a system for monitoring use and position of tools, in particular mechanical and diagnostic tools.

### Background

In mechanical workshops and other industrial situations it is necessary to keep track of the position of various tools and instruments. For example, a mechanic must ensure that he does not leave tools inside a customer's car. In the case of work being done on jet engines, leaving a tool inside the engine could have dangerous consequences. The mechanic is therefore required to check that all tools are accounted for when a particular job is completed.

In order to facilitate this check, it is well known to provide a toolbox with a number of foam cutouts. Each tool has a designated position in the toolbox marked by a piece of foam with a cutout section dimensioned to accommodate that particular tool. When a tool is replaced in the toolbox after use it is placed into its designated foam cutout. The mechanic can then see, at a glance, whether all of the tools have been replaced. A missing tool is easily identified by means of the empty cutout.

However, there are a number of disadvantages to this system. The first is that each time a new tool is acquired, a new cutout, dimensioned to exactly accommodate the new tool, must be made. The second disadvantage is that the cutouts in the toolbox take up a large amount of space, since by their nature they must be larger than the tools they accommodate. This means that the toolbox must be significantly larger than is strictly necessary to contain the tools.

A further problem in the mechanical field is the use of diagnostic tools. It is normal practice to charge a customer a higher fee for use of particular items of diagnostic equipment. The charge is calculated by determining the how long the diagnostic tool has been used on a particular vehicle. This system relies on each mechanic keeping an accurate record of when he starts using the tool and when he has finished using the tool. The system is thus prone to human error.

Yet a further problem arises where two or more mechanics use the same toolbox. In such scenarios it is difficult to ascertain when a tool is missing as to who is responsible for the missing tool.

### Summary

The present invention addresses these and other problems by providing a system for monitoring tools to enable a user to determine whether all tools have been replaced in their container, which overcomes the problems with the prior art outlined above. The invention can be applied in a number of different environments including automotive or aviation workshops. Using the system of the present invention it is possible to provide for automatically billing the customer for diagnostic tool use. Such a system is provided in claim 1 with advantageous embodiments described in the dependent claims.

Accordingly one embodiment provides a system for monitoring a set of tools, to enable a user to determine whether each tool in the set has been replaced in its container after use, comprising:
a transponder attached to each tool in the set;
a unique tool name assigned to each transponder;
an inventory of the tool names of the set of tools, associated with the tool container;
a proximity sensor provided on the tool container, which is capable of communicating with each transponder to identify which tools in the set are in the tool container and which tools in the set are not in the tool container;
means for comparing the tools which are identified as being in the tool container with the inventory; and
means for providing an indication to the user if all of the tools in the set are not in the tool container.

The invention further provides a plurality of user specific transponders, each of the user specific transponders being associated with a specific identified user of the tool container, and wherein the proximity sensor is further configured to communicate with each user specific transponder such that on identification that a tool has been removed from the container the proximity sensor identifies the user that has removed the tool, the system being further configured to store a data field associating the tool and user in a data store for subsequent interrogation. In this way it is possible to ascertain at a later date who last took the tool from the tool box.

It is to be appreciated that the set of tools may comprise only one tool, or a plurality of tools. Furthermore the tool container may be provided as a toolbox.

An advantage of the present invention is the provision of a system that gives an immediate indication as to whether a complete set of tools has been replaced in the tool container. A further advantage of the invention is that the system is not prone to human error. Yet another advantage of the system is that the system does not occupy a large amount of space in the toolbox or tool container.

According to a preferred feature of the invention, the transponder is a passive transponder. The transponder may be provided with an adhesive backing for attachment to the tool. Transponders of this type are widely and cheaply available in sheets with an adhesive backing. A transponder may simply be peeled from such a sheet and attached to a new tool. The user need only then assign a unique tool name to the new tool and add the new tool name to the inventory. This provides the advantage that new tools may be quickly and simply added to the tool set. A supply of transponders can be kept and applied to new tools as they are acquired.

Optionally, the system further comprises means for assigning a unique tool name to a transponder. The system may further comprise means for creating an inventory of the tool names of the set of tools. The system may further comprise means for associating the inventory with the tool container.

Any of the means for assigning a unique tool name, the means for creating an inventory of the tool names, the means for associating the inventory with the tool container and the means for comparing the tools in the container with the inventory may be provided by a computer program running on a computer, which is connectable to the tool container. Such a connection may be a physical connection or indeed may be a wireless connection, as will be appreciated by those skilled in the art.

The indication provided to the user may be a visual or audio indication, for example by means of an LED or an audible alarm.

The system may further comprise means for calculating the period of time a tool in the set is not in the container; means for determining a monetary amount to charge a customer for use of the tool; and means for automatically adding the monetary amount to a bill to be charged to the customer. This allows the user to charge a customer for use of a particular diagnostic tool without requiring him to keep an accurate written record of the period of use of the tool.

Preferably, the means for calculating the period of time a tool is not in the tool container, the means for determining the monetary amount and the means for adding the monetary amount to the customer's bill are also provided by a computer program running on a computer, which is connectable to the tool container.

According to one embodiment of the present invention a plurality of users may access the set of tools and the tool container, and the system further comprises a user proximity sensor associated with each user, which is capable of communicating with each tool transponder to determine if any tool in the set is proximal to that user and means provided on the tool container for indicating if a tool is proximal to a user. Each user proximity sensor may be provided on a key fob. An advantage of this feature is that it allows tools to be shared more effectively in a workshop by providing an indication to each user of where each tool in the set is.

According to an optional feature of the invention, the system further comprises an exit proximity sensor provided on an exit from a location at which the set of tools is kept, which is capable of communicating with each transponder to determine if any tool in the set is proximal to the exit and means for providing an indication that at least one of the tools in the set is proximal to the exit. The indication that at least one of the tools in the set is proximal to the exit may be a visual or audio indication. This feature of the invention may be used to prevent theft of tools, by giving an indication a tool is being removed from the location.

### Brief Description of the Drawings

Figure 1 shows in schematic form a tool box and computer which form components of a system for monitoring a set of tools in accordance with an embodiment of the invention.

Figure 2 is a table showing a typical data structure that may be used within the context of the present invention.

Figure 3 shows in perspective view an environment within which the system of the present invention may be utilized.

### Detailed Description of the Drawings

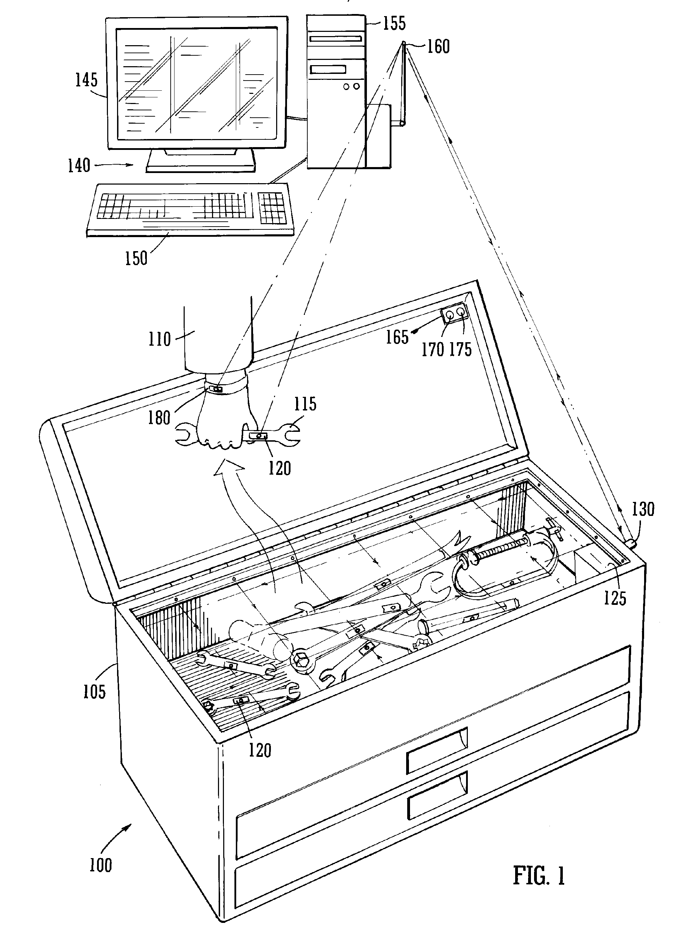

The invention will now be described with reference to Figures 1 to 3, which are provided to describe the invention with regard to an exemplary embodiment, that of a monitoring system for a tool box for use in an automobile workshop.

A shown in Figure 1, the invention provides a system 100 for monitoring a set of tools 105, to enable a user 110 to determine whether each individual tool 115 in the set has been replaced in its container after use. The system includes a transponder 120 attached to each tool in the set. The transponder is configured to communicate wirelessly with a corresponding receiver 125 so as to enable a two way communication link between the two. By the term wirelessly the present invention intends any communication protocol that enables the transfer of data between separate entities. The receiver 125 can be considered a proximity sensor which is capable of communicating with each transponder to identify which tools in the set are in the tool container and which tools in the set are not in the tool container. The communications between the individual tools and the receiver 125 are then relayed via a communication link, shown in Figure 1 as an antenna 130, with a computer system 140. The computer system 140 will typically include the standard components of such systems such as a screen 145, keyboard 150, hard drive (or other storage device) 155, and a communication link 160 which is compatible with the communication link of the tool box.

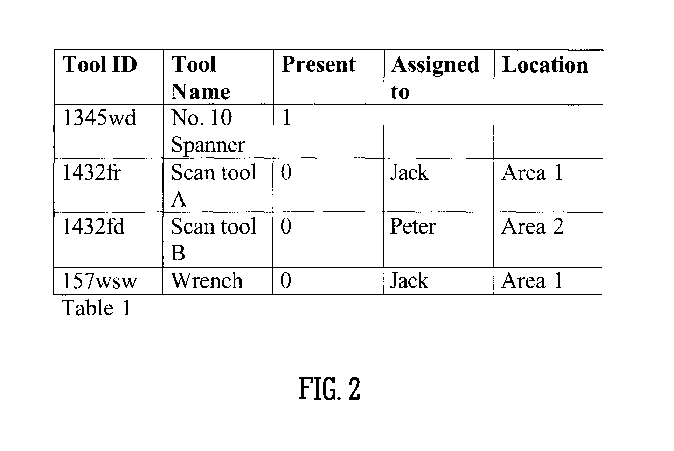

The computer system maintains within a data structure an inventory of the tools stored within the toolbox, and this inventory is updated resulting from the communications between the transponder 120 and the receiver 125. So as to ensure that the user may easily ascertain which tool is present or indeed missing, the inventory typically associates or assigns a unique tool name to each transponder. It will be appreciated that the data identifier communicated by the transponder to the receiver typically is a mathematical string which would have no apparent relationship with the correct name of the tool. By providing an inventory in this way, if the data structure is interrogated by a user, the user may extract or provide a sensible (i.e. proper) name for the tool, to identify if the tool is present or absent in the tool box. An example of such a data structure is shown in Table 1, Figure 2.

It will be appreciated from a review of the exemplary data shown Table 1 , that the inventory shows that the Scan tools A & B are not in the box and are assigned to Jack and Peter respectively. They are also identified as being in Areas 1 & 2. Jack has also possession of a wrench which is also in Area 1. The number 10 spanner is in the tool box. The following discussion will describe how the information regarding the possessor of the tool and the location of the tool may be provided.

It will be further appreciated that the inventory of the tool names of the set of tools that is associated with the tool container may be updated by a user if one or more new tools are added to the container or indeed if one or more tools are permanently removed- as opposed to lost- from the container. Such updating of the inventory may be restricted to one or more "super-users" of the system who have been allocated security rights to update the master table of the inventory.

The system includes means for comparing the tools which are identified as being in the tool container with the inventory. The means will depend on the nature of the data structure that is used for the inventory but this will be apparent to the person skilled in the art, as being any software interrogatory technique of the type commonly used for investigating data structures. Examples of such software tools include those based on the Oracle or SQL databases. Any of the means for assigning a unique tool name, the means for creating an inventory of the tool names, the means for associating the inventory with the tool container and the means for comparing the tools in the container with the inventory may be provided by a computer program running on the computer, which is connectable to the tool container. Although shown in Figure 1 as a wireless connection such a connection may alternatively be a physical network connection.

The system may include means for providing an indication to the user if all of the tools in the set are not in the tool container. Such means may include a visual display on the container, shown in Figure 1 as including a first LED indicator 170 which will shine a first colour (for example red) if all the tools are not in the box and a second LED indicator 175 which will illuminate a second colour (for example green) if they are present. Another example of an indicator would be an audible alarm that would be activated if the tool box was closed without having its full complement of tools returned. Alternatively the tool box itself may not be provided with such an indicator and the user will have to perform an audit using the computer to ascertain the complement of the tool box.

As mentioned above, using the system of the present invention it is possible to associate a user with a specific tool. The invention enables this by providing a plurality of user specific transponders, each of the user specific transponders being associated with a specific identified user of the tool container. This may be provided as a fob or indeed as shown in Figure 1 as a wrist band 180. The proximity sensor 125 is further configured to communicate with each user specific transponder such that on identification that a tool has been removed from the container the proximity sensor identifies the user that has removed the tool. This identification is based on identifying the complement of the tool box before an identified user has come into proximity with the tool box, and then identifying the complement of the tool box after the user has left the proximity of the tool box. If there is any difference in the two, the system is configured to determine that that identified user must have taken the specific tool. Furthermore, if there is an additional tool in box after the user has come into and left the proximity of the tool box, the system determines that that user must have replaced a tool. As is shown, in Table 1 , the system is further configured to store a data field associating the tool and user in a data store for subsequent interrogation. In this way it is possible to ascertain at a later date who last took the tool from the tool box.

It is to be appreciated that the set of tools may comprise only one tool, or a plurality of tools. An advantage of the present invention is the provision of a system that gives an immediate indication as to whether a complete set of tools has been replaced in the tool container. A further advantage of the invention is that the system is not prone to human error. Yet another advantage of the system is that the system does not occupy a large amount of space in the toolbox or tool container. The components within the tool box are provided as robust elements so as to cope with any abuse of the type that would be common within such an environment.

According to a preferred feature of the invention, the transponder is a passive transponder, ie of the type that reacts to an interrogatory signal and does not actively transmit continuously. Alternatively it may be considered appropriate to use an active transponder, ie of the type that does continuously transmit its identity to the environment within which it is located. The transponder may be provided with an adhesive backing for attachment to the tool. Transponders of this type are widely and cheaply available in sheets with an adhesive backing. A transponder may simply be peeled from such a sheet and attached to a new tool. The user need only then assign a unique tool name to the new tool and add the new tool name to the inventory. This provides the advantage that new tools may be quickly and simply added to the tool set. A supply of transponders can be kept and applied to new tools as they are acquired. The manner of application of the transponder to the tool will really depend on the type of tool and its common usage, and the environment within which it will be used. For example a scan diagnostic tool which is a computer implemented tool used for interrogating on-board computer systems is an expensive piece of equipment and is usually treated with more care than a hammer for example. In such an example, simple application of a transponder to the scan tool using an adhesive may suffice whereas the hammer may require the embedding of the transponder in a rubber grip or handle and the molding of that to the tool. Such a latter embodiment may require the incorporation of the transponder into the tool by a tool supplier at the time of manufacture of the tool, as opposed to a later association of the two in the work shop itself.

The system may further comprise means for calculating the period of time a tool in the set is not in the container; means for determining a monetary amount to charge a customer for use of the tool; and means for automatically adding the monetary amount to a bill to be charged to the customer. This allows the user to charge a customer for use of a particular diagnostic tool without requiring him to keep an accurate written record of the period of use of the tool. As was mentioned above with regard to the scan tool, such tools are expensive pieces of equipment and may require a different billing structure than is traditionally provided. By associating a clock with the inventory, it is very easy to determine the length of time that a particular tool has been out of the tool box and this duration can then be automatically routed to a billing system for the workshop where it will form a component of the final invoice to the customer.

Preferably, the means for calculating the period of time a tool is not in the tool container, but is provided as software in the associated computer. Additionally, the means for determining the monetary amount and the means for adding the monetary amount to the customer's bill are preferably also provided by a computer program running on a computer, which is connectable to or in communication with the tool container.

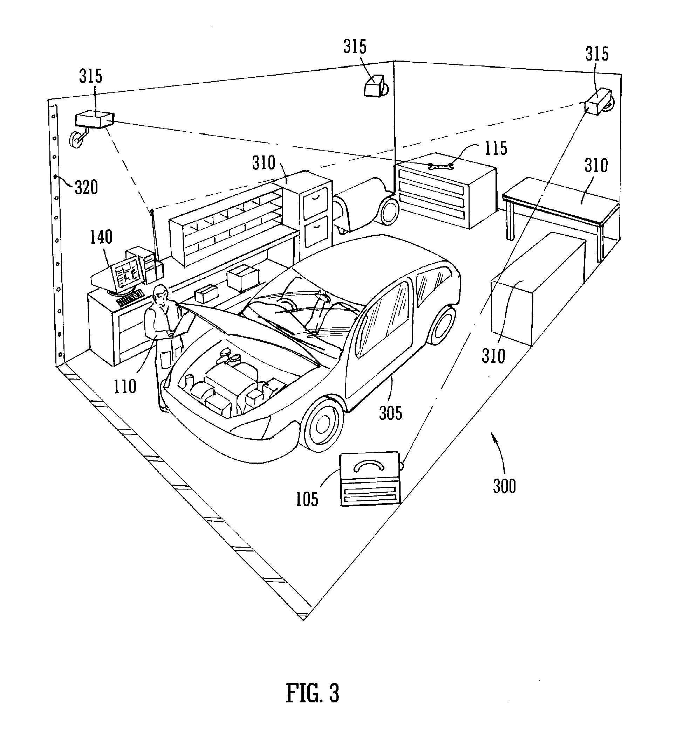

Figure 3 shows an example of how the system of the present invention may be deployed in an automotive workshop 300. A mechanic 110 is shown working on an automobile 305. Within the workshop a plurality of counters, tables, cabinets etc. 310, are provided. Each of these can provide a resting location for a tool 115, and if the user forgets where the tool is, it can be difficult to replace it within the tool box. Although interrogation of the computer system 140 will indicate that a specific user has taken the tool from the box, and is therefore accountable for that tool, it does not assist in the finding of the tool. The invention addresses this by providing a plurality of receivers 315, each of which map out an area of the workshop within which they can sense a user or a tool. Desirably the receivers 315 are wall mounted on an upper region of the wall so that their coverage is maximized. The receivers are configured to communicate both with the computer system 140 and each of the transponders on the users and/or the tools. When a specific receiver 315 senses that a tool has being brought into its location it can relay that information back to the inventory where it will be updated for future interrogation. As such if the user takes a tool from the tool box and brings it to an area identified as Area 1, and then leaves that area without the tool, he can subsequently ascertain where he left the tool by examining the inventory.

According to another embodiment of the present invention a plurality of users may access the set of tools and the tool container, and the system further comprises a user proximity sensor associated with each user, which is capable of communicating with each tool transponder to determine if any tool in the set is proximal to that user and means provided on the tool container for indicating if a tool is proximal to a user. In this way the users' transponder communicates with the tool transponder as opposed to the user transponder and tool transponder each communicating only with the central computer. An advantage of this feature is that it allows tools to be shared more effectively in a workshop by providing an indication to each user of where each tool in the set is.

The system of the present invention also may be used to control user access to a tool. Some tools for example may require an advanced level of training to those of other tools. As a user and tool are associated with one another, the system may be configured to ensure that that user is authorized to use that tool. This may be communicated in the form of a warning displayed or broadcast to the user on removal of the tool. Alternatively, the specific tool may be locked within its container and the lock associated with a category of user which is previously defined. Only users of a specific category may be provided with access to the lock, which could be configured to automatically release once the category of user is sensed proximal to the lock.

A further example of how the use of the transponders can be used within the context of the present invention, is to control overall access to the tool container. The system could be configured in certain embodiments to refuse access to the container to users not being registered to the system.

According to an optional feature of the invention, the system further comprises an exit proximity sensor 320 provided on an exit from a location at which the set of tools is kept, which is capable of communicating with each transponder to determine if any tool in the set is proximal to the exit and means for providing an indication that at least one of the tools in the set is proximal to the exit. The indication that at least one of the tools in the set is proximal to the exit may be a visual or audio indication. This feature of the invention may be used to prevent theft of tools, by giving an indication a tool is being removed from the location.

Although described hereinbefore as a system for monitoring the contents of the tool container, it will be appreciated that certain environment will share the contents of a tool set between two or more containers. The system of the invention may be extended to cater for this by identifying within the inventory of the tool set in which container the tool is located. Such extension will be easily achieved by adding a data field for each of the tool containers and then enabling a communication between the proxi mity sensors of each container (each being uniquely identified) and the data store.

The two or more containers could be provided in different geographic locations. Such a situation would arise for example where an expensive diagnostic piece of equipment was purchased, yet did not require continual usage at one location. Using the system of the present invention it is possible for the tool to be brought from one geographic location to another geographic location, and yet for the inventory of the tool set to show the location. Once the tool is taken from its container in location 1, this is updated to the inventory. When it arrives at location 2, it is then automatically sensed by the sensors provided at location 2. By enabling a networking of the computer systems at the two locations and enabling communication between the two, the arrival at location 2 can be updated to the inventory.

It will be appreciated that what has been described herein is a tool monitoring system which is configured for ensuring that the location of tools of a tool set are accurately known. This can be used for a variety of purposes such as for example ensuring that tools do not become lost, identifying billing systems, ensuring that a user is effectively working (if he has never any tools associated with him then what is he doing during the day?) and provides for an efficiency in operation of a workshop. Although the invention has been described with reference to specific embodiments and examples relating to an automotive workshop it will be appreciated that the foregoing description has been presented for the purpose of illustration only. It is not intended to be exhaustive or to limit the concepts that have been disclosed. Numerous modifications and variations are possible. For example, the embodiments that have been described may include or be utilized with any appropriate vehicle or voltage source, such as a battery, an alternator and the like, providing any appropriate voltage, such as about 12 volts, about 42 volts and the like. The embodiments that have been described may be used with any desired system or engine. These systems or engines may use fossil fuels, such as gasoline, natural gas, propane and the like, electricity, such as that generated by a battery, magneto, solar cell and the like, wind and hybrids or combinations thereof. These systems or engines may be incorporated into other systems, such as an automobile, a truck, a boat or ship, a motorcycle, a generator, an airplane and the like. In short, the scope of this application is limited solely to the claims that now follow.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A system for monitoring a set of tools stored within a tool container, the system, comprising:
a tool transponder attached to each tool in the set;
a unique tool name assigned to each tool transponder;
a data store having an inventory of the tool names of the set of tools, associated with the tool container;
a user transponder associated with each of the users of the set of tools;
a proximity sensor provided on the tool container, which is capable of communicating with each tool transponder to identify which tools in the set are in the tool container and which tools in the set are not in the tool container, the proximity sensor being further configured to determine when a user comes into the proximity of the sensor; and
means for associating within the data store, a user with a specific tool, the association being effected on evaluating the difference in the content of the tool set before and after a user comes into proximity with the tool set

2. A system for monitoring a set of tools as claimed in claim 1, wherein the transponder is a passive transponder.

3. A system for monitoring a set of tools as claimed in any preceding claim, wherein the transponder is provided with an adhesive backing for attachment to the tool.

4. A system for monitoring a set of tools as claimed in any preceding claim, further comprising means for assigning a unique tool name to a transponder.

5. A system for monitoring a set of tools as claimed in any preceding claim, further comprising means for creating an inventory of the tool names of the set of tools.

6. A system for monitoring a set of tools as claimed in any preceding claim, further comprising means for associating the inventory with the tool container.

7. A system for monitoring a set of tools as claimed in claim 4, 5 or 6, wherein the means for assigning a unique tool name to a transponder is provided by a computer program running on a computer, which is connectable to the tool container.

8. A system for monitoring a set of tools as claimed in claim 5, 6 or 7, wherein the means for creating an inventory of the tool names of the set of tools is provided by a computer program running on a computer, which is connectable to the tool container.

9. A system for monitoring a set of tools as claimed in claim 6, 7 or 8, wherein the means for associating the inventory with the tool container is provided by a computer program running on a computer, which is connectable to the tool container.

10. A system for monitoring a set of tools as claimed in any preceding claim, wherein the means for comparing the tools which are identified as being in the container with the inventory is provided by a computer program running on a computer, which is connectable to the tool container.

11. A system for monitoring a set of tools as claimed in any preceding claim further comprising means for providing an indication to the user if all of the tools i n the set are not in the tool container, the indication being provided to the user as one or more of a visual, aural or audio indication.

12. A system for monitoring a set of tools as claimed in any preceding claim, further comprising: means for calculati ng the period of time a tool in the set is not in the container; means for determining a monetary amount to charge a customer for use of the tool; and means for automatically adding the monetary amount to a bill to be charged to the customer.

13. A system for monitoring a set of tools as claimed in claim 12, wherein the means for calculating the period of time a tool is not in the tool container, the means for determining the monetary amount and the means for adding the monetary amount to the customer's bill are provided by a computer program running on a computer, which is connectable to the tool container.

14. A system according to any preceding claim, wherein a plurality of users may access the set of tools and the tool container, and further comprising: a user proximity sensor associated with each user, which is capable of communicating with each tool transponder to determine if any tool in the set is proximal to that user; means provided on the tool container for indicating if a tool is proximal to a user.

15. A system according to any one of claims 1 to 13 further comprising a plurality of receivers located within an area within which the tool set is used, the plurality of receivers being configured to map a specific sub-region of the area, and wherein the plurality of receivers are further configured to communicate with the tool transponders and with the data store having the inventory of the tool set so as to update the inventory when a specific tool is monitored as being within the area of that receiver.

16. A system according to any one of claims 1 to 13 wherein a plurality of users may access the set of tools and access to specified tools within the set is restricted based on a categorization of the individual user, the system being configured, on identification that a user is within the proximity of the tool container, whether the user is authorized to access specific tools stored within the container.

17. A system according to claim 16 wherein the system is configured to restrict access to the container by effecting a locking of the container on determining that the user proximal to the container is not authorized to access the container.

18. A system according to claim 16 wherein the system is further configured to effect individual restriction on access to specific tools of the tool set based on an evaluation of a user profile of the user proximal to the tool container.

19. A system for monitoring a set of tools as claimed in any preceding claim, further comprising: an exit proximity sensor provided on an exit from a location at which the set of tools is kept, which is capable of communicating with each transponder to determine if any tool in the set is proximal to the exit; and means for providing an indication that at least one of the tools in the set is proximal to the exit.

20. A system according to any preceding claim being further configured to enable a monitoring of the location of individual tools of the tool set over an extended geographical area, the system comprising a plurality of proximity sensors, each of the proximity sensors being associated with a specific geographic location and wherein the system is configured to update the inventory of the tool set based on the identification by a proximity sensor that a specific tool is proximal to that proximity sensor.

21. A method of monitoring a set of tools stored within a tool container, the method comprising the steps of:
Associating a tool transponder with each tool in the set of tools;
Assigning a unique tool name to each tool transponder;
Providing within a data store an inventory of the tool names of the set of tools, associated with the tool container;
Associating a user transponder with each of the users of the set of tools;
Providing a proximity sensor with the tool container, the proximity sensor being configured to communicate with each tool transponder to identify which tools in the set are in the tool container and which tools in the set are not in the tool container, the proximity sensor being further configured to determine when a user comes into the proximity of the sensor; and
Associating within the data store, a user with a specific tool, the association being effected on evaluating the difference in the content of the tool set before and after a user comes into proximity with the tool set.

22. A computer program which when run on a computer is configured to carry out the method steps of claim 20.
